(19) Europäisches Patentamt
European Patent Office
Office européen des brevets

(11) **EP 2 674 388 A1**

(12) **EUROPÄISCHE PATENTANMELDUNG**

(43) Veröffentlichungstag:
**18.12.2013 Patentblatt 2013/51**

(51) Int Cl.:
***B66F 9/075*** *(2006.01)*      ***G01S 17/06*** *(2006.01)*

(21) Anmeldenummer: **13162248.2**

(22) Anmeldetag: **04.04.2013**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**

(30) Priorität: **11.06.2012   DE 102012209722**

(71) Anmelder: **Siemens Aktiengesellschaft
80333 München (DE)**

(72) Erfinder: **Soika, Martin, Dr.
84028 Landshut (DE)**

(54) **Orientierungsbestimmung eines Transportmittels in einer Aufnahme- und Ablageposition**

(57)    Die vorliegende Erfindung betrifft ein Verfahren und eine Vorrichtung zur Orientierungsbestimmung eines Transportmittels während einer Aufnahme oder einer Ablage eines Transportgutes mittels des Transportmittels. Dazu werden lediglich Positionsänderungen des Transportmittels während der Aufnahme oder der Ablage erfasst. Es können auf diese Weise besonders einfach Ablage- oder Aufnahmepositionen von Stahlringen, die mittels Gabelstapler befördert werden, bestimmt und diesen Positionen Identitäten der Ringe zugeordnet werden.

# FIG 3

Printed by Jouve, 75001 PARIS (FR)

**Beschreibung**

Die Erfindung betrifft ein Verfahren und eine Vorrichtung zur Bestimmung einer Orientierung eines Transportmittels in einem Koordinatensystem

Bandstahl wird in Form von so genannten Ringen hergestellt, die dann entweder von Portalkranen oder Gabelstaplern auf die Lagerplätze transportiert werden. Ringe werden ebenso als "Coils" bezeichnet. Für die Lagerlogistik in der Stahlproduktion ist die Erfassung der Materialbewegungen von zentraler Bedeutung. Nur so ist gewährleistet, dass das Lagerabbild mit der Realität übereinstimmt. Die Ringe werden hintereinander quer in so genannten "Rinnen", die ein unbeabsichtigtes Wegrollen verhindern, gelagert. Auf Grund deutlich unterschiedlicher Ringbreiten, die sich aus einer jeweiligen Blechbreite ergeben, und einer Ablage der Rinne auf Kontakt, ist eine semantische Beschreibung der Lagerplätze in einem Lagerverwaltungssystem LVS nicht praktikabel. Vielmehr wird der Ablageort eines Coils über seine Position X/Y relativ zu einem in der Lagerhalle ortsfesten Koordinatensystem H beschrieben. Bei einer Einlagerung muss die Ablageposition bestimmt und dem LVS mitgeteilt werden, damit das Lagerabbild aktuell bleibt. Bei der Auslagerung muss über die bestimmte Position die Identität des Ringes von LVS angefragt werden. Daher ist es Aufgabe des Transportmittels, das beispielsweise ein Stapler oder ein Portalkran sein kann, die Ringposition zu bestimmen. Dazu wird zum einen die Position des Transportmittels relativ zum ortsfesten Referenzkoordinatensystem H bestimmt. Ebenso wird die Position des Ringes relativ zum Transportmittel in einem zum Transportmittel ortsfesten Koordinatensystem T erfasst. Mittels den kinematischen Zusammenhängen, wie es beispielsweise eine Transportmittelkinematik ist oder Montagepositionen sind, oder ob eine Gabel oder ein C-Haken verwendet werden, kann darüber die Position des Rings relativ zum Hallenkoordinatensystem H bestimmt werden. Da im Allgemeinen die Position des Transportmittels nicht gleich der Position des Transportgutes ist, ist für diese Berechnung die Orientierung des Transportmittels S gegenüber dem Hallenkoordinatensystem H erforderlich. Die Orientierung bestimmt, in welche Richtung die Ablage des Transportgutes relativ zum Transportmittel weist. Die Genauigkeitsanforderungen sind für den angestrebten Einsatz als gering einzustufen, da die Lagerorte durch die Rinnen vorgegeben sind und diese nur in ganzzahligen Vielfachen von 90° in einem Hallenboden verankert sind.

Die Bestimmung der Orientierung des Transportmittels wird herkömmlicherweise folgendermaßen ausgeführt:

1. Ein Positionssystem liefert die Orientierung bereits zusätzlich zu den Positionsdaten. Dazu werden auf dem Transportmittel zwei gleichartige Positionssysteme, beispielsweise Antennen, an verschiedenen Orten des Transportmittels angebracht. Dies kann beispielsweise vorne links und hinten rechts des Transportmittels sein. Die Orientierung relativ zum ortsfesten Hallenkoordinatensystem H wird über die Positionsdifferenzen ermittelt. Beispielsweise kann ein Radarsystem mit zwei oder mehreren Empfangsantennen verwendet werden.

2. Zusätzlich kann ein Kreiselkompass verwendet werden, wobei mittels dieser zusätzlichen Sensorik die Transportmittelorientierung jederzeit und schlupfunabhängig bestimmt werden kann.

3. Gyroskop
Mit dieser zusätzlichen Sensorik kann die Drehgeschwindigkeit des Transportmittels bestimmt werden. Eine Integration dieser Werte liefert zusammen mit einer geeigneten Referenzierung gegenüber H die Orientierung des Transportmittels.

4. Eine Orientierungsbestimmung kann mittels Positionstracking ausgeführt werden. Mittels einer fortwährenden Beobachtung der Transportmittelposition und der Verwendung der das Transportmittel kennzeichnenden Kinematik und der damit verbundenen Bewegungseinschränkungen, kann unter Einsatz geeigneter Filterverfahren die Orientierung geschätzt werden. Die kennzeichnende Kinematik ist durch die Art der Bewegung bestimmt. Diese ist beispielsweise vorgegeben durch eine Achsgeometrie, eine Art und Lenkbarkeit der Räder usw. Ein geeignetes Filterverfahren kann beispielsweise einen Kalman-Filter verwenden.

5. Eine Transportmittelorientierung kann ebenso herkömmlicherweise mittels einer Positionsauswertung der Lastwechsel von Lagerpositionen relativ zu einer An-/Abrückposition ausgeführt werden. Beispielsweise für einen Staplerbetrieb ergeben sich folgende Arbeitsabläufe:

A: Ringaufnahme

| 1. Schritt | Gabel bzw. Dorn werden lediglich teilweise in das Ringinnere eingefahren. |
|---|---|
| 2. Schritt | Der Ring wird angehoben und die Transportmittelposition zum Anhebezeitpunkt gemerkt. |

| | |
|---|---|
| | Dies entspricht einer Position 1. |
| 3. Schritt | Der Ring wird über eine kurze Rückwärtsfahrt des Staplers abgerückt und damit vereinzelt. |
| 4. Schritt | Ring wird wieder abgestellt und die Transportmittelposition zum Ablagezeitpunkt gemerkt. Dies entspricht einer Position 2. |
| 5. Schritt | Die Gabel/der Dorn werden ganz in das Ringauge eingefahren. |
| 6. Schritt | Der Ring wird angehoben und abtransportiert. |
| B: Ringablage 1. Schritt | Der Ring wird in der Rinne ca. 50 cm vor dem nächsten Ring in der Rinne abgesetzt. Die Position des Transportmittels zum Zeitpunkt des Absetzens wird gemerkt. Dies entspricht einer Position 1. |
| 2. Schritt | Die Gabel/der Dorn werden mindestens soweit aus dem Ringauge herausgezogen, dass das Ende der Gabel/des Dorns nicht mehr auf der anderen Seite des Rings hinausragt, sodass beim Anrückvorgang der nächste bereits eingelagerte Ring in der Rinne nicht beschädigt wird. |
| 3. Schritt | Der Ring wird angehoben und an die Ringreihe in der Rinne angerückt. |
| 4. Schritt | Der Ring wird an seiner Lagerposition abgesetzt, die Transportmittelposition dort gemerkt. Dies entspricht einer Position 2. |
| 5. Schritt | Die Gabel/der Dorn wird aus dem Ringauge herausgezogen. Aus der relativen Lage der Position 1 und 2 kann die Orientierung des Transportmittels für den Zeitraum des Ladevorgangs bestimmt werden. |

Es ist Aufgabe ein Verfahren und eine Vorrichtung zur Bestimmung einer Orientierung eines Transportmittels derart bereitzustellen, dass die Bestimmung einfach und innerhalb geforderter Fehlertoleranzen zuverlässig ausgeführt werden kann.

Die Aufgabe wird durch ein Verfahren gemäß dem Hauptanspruch und eine Vorrichtung gemäß dem Nebenanspruch gelöst.

Gemäß einem ersten Aspekt wird ein Verfahren zum Erfassen einer jeweiligen Orientierung S eines Transportmittels in einem ersten Koordinatensystem H während eines Aufnehmens oder Ablegens eines Transportgutes von einer oder auf eine Ablageeinrichtung bereitgestellt, wobei ein Erfassen von jeweiligen Positionsänderungen des Transportmittels in dem ersten Koordinatensystem H, während sich eine Tragefläche des Transportmittels innerhalb des Transportgutes derart zu diesem relativ bewegt, dass sich die Position des Transportgutes relativ zum Transportmittel in einem zum Transportmittel festen zweiten Koordinatensystem T ändert, ausgeführt wird, wobei eine Richtung, in die eine Positionsänderung erfolgt, die jeweilige Orientierung S bestimmt.

Gemäß einem zweiten Aspekt wird eine Vorrichtung zum Erfassen einer jeweiligen Orientierung eines Transportmittels in einem ersten Koordinatensystem während eines Aufnehmens oder Ablegens eines Transportgutes von einer oder auf eine Ablage der Einrichtung beansprucht, die dadurch gekennzeichnet ist, dass ein Erfassen von jeweiligen Positionsänderungen des Transportmittels in dem ersten Koordinatensystem, während sich eine Tragefläche des Transportmittels innerhalb des Transportgutes derart zu diesem relativ bewegt, dass sich die Position des Transportgutes relativ zum Transportmittel in einem zum Transportmittel festen zweiten Koordinatensystem ändert, mittels einer Erfassungseinrichtung ausgeführt wird, wobei eine Richtung, in die eine Positionsänderung erfolgt, die jeweilige Orientierung bestimmt.

Es erfolgt ein Erfassen der Transportmittelbewegung in den Zeitdauern, in denen sich eine Tragefläche des Transportmittels innerhalb des Transportguts derart zu diesem relativ bewegt, dass das Transportgut sich nicht mit dem Transportmittel mit bewegt.

Es erfolgt ein Erfassen der Bewegungen des Transportmittels in dem ersten Koordinatensystem H in Zeitdauern, in denen sich eine Tragefläche des Transportmittels innerhalb des Transportgutes derart zu diesem relativ bewegt, dass sich die Position des Transportguts relativ zum Transportmittel in dem zum Transportmittel festen zweiten Koordinatensystems T ändert.

Gegenstand dieser Erfindung ist eine Erfassung von Transportmittelbewegungen erstens über den Zeitraum, in dem sich die Tragefläche des Transportmittels innerhalb des Transportgutes befindet und zweitens während sich das Transportgut relativ zum Transportmittel bewegt, d. h. dass das Transportgut nicht angehoben ist und sich daher nicht mit dem Transportmittel mitbewegt. Zusammen mit weiteren anwendungsspezifischen Kriterien für den Zeitpunkt einer geeigneten Auswertung von vorab gemerkten Informationen kann die Transportmittelbewegung einfach erfasst werden.

Besonders vorteilhaft ist keine explizite Lastwechselerkennung notwendig. Weiterhin können besonders vorteilhaft Schiebebewegungen durch Verwendung von Akkumulatoren automatisch entsprechend berücksichtigt werden. Dies, insbesondere im Gegensatz zur Lösung 5 im Einleitungsteil, bei der die Relativbewegung lediglich durch eine Differenz von Anhebe-/ Absetzposition zur Einfahr-/Ausfahrposition berechnet wird.

Weitere vorteilhafte Ausgestaltungen werden in Verbindung mit den Unteransprüchen beansprucht.

Gemäß einer vorteilhaften Ausgestaltung kann ein Erfassen von Positionsänderungen des Transportmittels während des Aufnehmens des Transportgutes mittels Eindringen der Tragefläche in das Transportgut bis zu einem minimalen Abstand $D_{min}$ des Transportgutes zum Transportmittel ausgeführt werden.

Gemäß einer weiteren vorteilhaften Ausgestaltung kann ein Bestimmen einer Aufnahmeposition des Transportgutes mittels zu einem Anfangszeitpunkt des Einbringens erfolgenden Erfassens der Position des Transportmittels in dem ersten Koordinatensystem und der Position des Transportgutes relativ zum Transportmittel in dem zum Transportmittel festen zweiten Koordinatensystem unter Einbeziehung der bestimmten Orientierung des Transportmittels ausgeführt werden.

Gemäß einer weiteren vorteilhaften Ausgestaltung kann ein Erfassen von Positionsänderungen des Transportmittels während des Ablegens des Transportgutes mittels Ausbringen der Tragefläche aus dem Transportgut bis zu einem maximalen Abstand DMax des Transportgutes zum Transportmittel ausgeführt werden.

Gemäß einer weiteren vorteilhaften Ausgestaltung kann ein Bestimmen einer Ablageposition des Transportgutes mittels zu einem Endzeitpunkt des Ausbringens erfolgenden Erfassens der Position des Transportmittels in dem ersten Koordinatensystem und der Position des Transportgutes relativ zum Transportmittel in dem zum Transportmittel festen zweiten Koordinatensystem unter Einbeziehung der bestimmten Orientierung des Transportmittels ausgeführt werden.

Gemäß einer weiteren vorteilhaften Ausgestaltung kann ein Berechnen der Orientierung des Transportmittels mittels Akkumulierens der Positionsänderungen des Transportmittels ausgeführt werden. Es kann während der Zeitdauern ein Berechnen der jeweiligen Änderungen an den jeweiligen Positionen des Transportmittels und ein Aufaddieren der Änderungen für alle Zeitdauern ausgeführt werden.

Gemäß einer weiteren vorteilhaften Ausgestaltung können die Positionsänderungen des Transportmittels diskrete Positionsänderungen sein.

Gemäß einer weiteren vorteilhaften Ausgestaltung kann ein Berechnen einer Orientierung anhand akkumulierter diskreter Positionsänderungen des Transportmittels mit der Formel Orientierungswinkel beta = atan2(dy, dx) ausgeführt werden.

Gemäß einer weiteren vorteilhaften Ausgestaltung kann das erste Koordinatensystem zweidimensional sein und sich parallel zu einer Bodenfläche erstrecken.

Gemäß einer weiteren vorteilhaften Ausgestaltung kann das zweite Koordinatensystem zweidimensional sein und sich im ersten Koordinatensystem erstrecken.

Gemäß einer weiteren vorteilhaften Ausgestaltung kann mittels der Aufnahmeposition oder der Ablageposition eine Identifizierung des Transportgutes ausgeführt werden.

Gemäß einer weiteren vorteilhaften Ausgestaltung kann das Transportgut ringförmiger Bandstahl, das Transportmittel ein Gabelstapler und die Ablageeinrichtung eine Rinne sein.

Gemäß einer weiteren vorteilhaften Ausgestaltung kann die Rinne entlang eines ganzzahligen Vielfachen von 90 in einem Boden verankert sein.

Die Erfindung wird anhand von Ausführungsbeispielen in Verbindung mit den Figuren näher beschrieben. Es zeigen:

Figur 1    ein erstes Ausführungsbeispiel einer Anordnung;

Figur 2    ein herkömmliches Ausführungsbeispiel einer Orientierungsbestimmung;

Figur 3    eine Draufsicht während einer Orientierungsbestimmung;

Figur 4    eine Seitenansicht einer Orientierungsbestimmung;

Figur 5    eine Seitenansicht einer weiteren Orientierungsbestimmung.

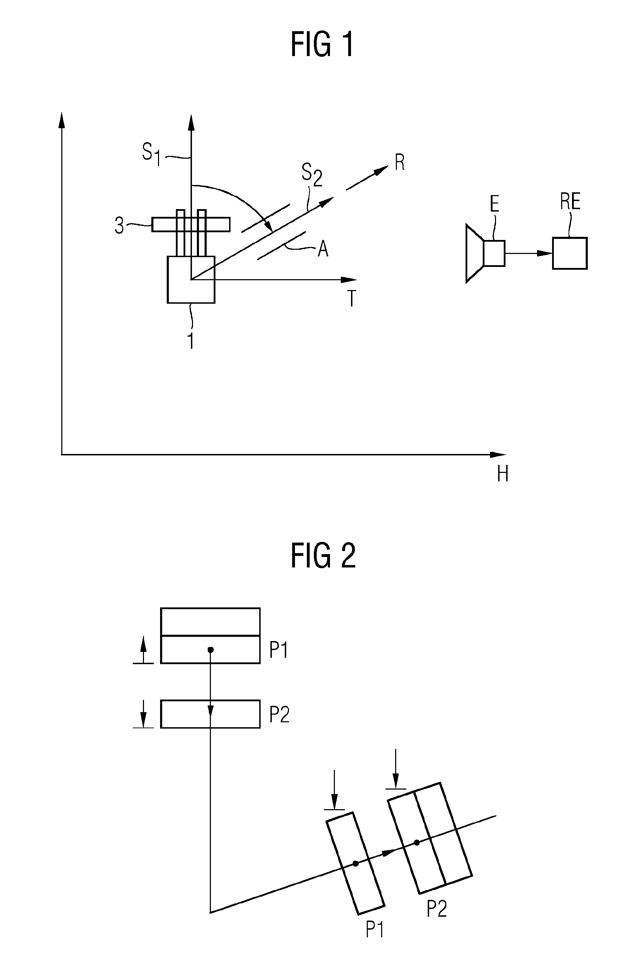

Figur 1 zeigt eine Darstellung einer Anordnung in einem ersten Koordinatensystem H. In diesem Koordinatensystem H ist ein Transportmittel 1 in Bezug zu einem Transportgut 3 dargestellt, wobei die Position des Transportgutes 3 in Relation zum Transportmittel 1 in einem zu diesem ortsfesten Koordinatensystem T erfasst wird. Zur eindeutigen Positionsbestimmung der Position des Transportgutes 3 ist zusätzlich die Information einer Orientierung S des Transportmittels 1 erforderlich. Figur 1 zeigt wie eine erste Orientierung S1 für eine Ablage in eine Ablageeinrichtung A in Übereinstimmung mit einer zweiten Orientierung S2 einer Rinne R für eine Ablage gebracht werden muss. Eine Erfassungseinrichtung E kann die jeweiligen Positionen erfassen, die mittels einer Rechnereinrichtung RE ausgewertet werden können. Erfassungseinrichtungen können beispielsweise Kameras, Scanner oder vergleichbare Sensoren sein. Eine Rechnereinrichtung kann beispielsweise ein Personalcomputer mit einem dazugehörigen Lagerverwaltungsprogramm sein.

Figur 2 zeigt eine Anordnung, die zur Orientierungsbestimmung eines Transportmittels 1 ein herkömmliches Verfahren gemäß Nummer 5 des Einleitungsteiles angewendet wird. An einer Aufnahmeposition oder an einer Ablageposition entstehen jeweils zwei definierte Positionen 1 und 2, wobei deren Verbindungsstecken die jeweiligen Orientierungen S1 oder S2 darstellen.

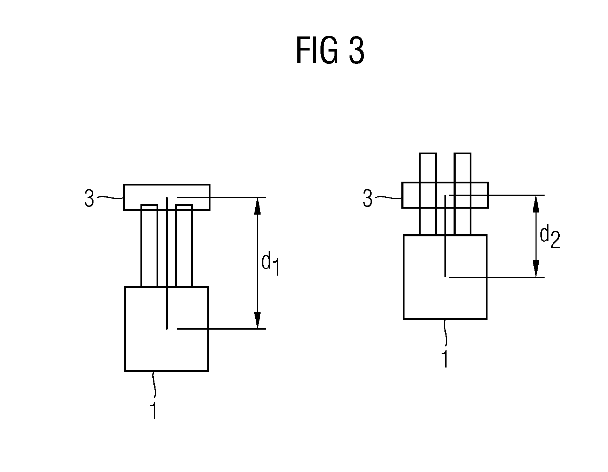

Figur 3 zeigt eine Draufsicht für den Zeitraum in dem eine Positionsänderung des Transportmittels 1 erfasst wird. Gegenstand der Erfindung ist ein neuartiges Verfahren zur Orientierungsbestimmung eines Transportmittels. Ein Transportmittel 1 kann beispielsweise ein Gabelstapler sein, der Bandstahlringe 3 als Transportgut befördert. Eine Orientierungsbestimmung wird für den Zeitraum einer Ringaufnahme und den einer Ringablage ausgeführt. Das Verfahren nutzt während des Lastwechsels gegebene zusätzliche Randbedingungen. Grundgedanke des Verfahrens ist die Erfassung der Transportmittelbewegungen lediglich für die Zeiträume, in dem sich die Gabel/der Dorn im Ringauge befindet und während sich der Ring relativ zum Transportmittel bewegt, das heißt, er nicht angehoben ist und sich daher nicht mit dem Transportmittel mitbewegt. Dazu werden in festgelegten Zeitabschnitten anhand der Transportmittelpositionen die jeweiligen Änderungen berechnet und für die Zeitabschnitte aufaddiert, in dem beide obige Bedingungen erfüllt sind. Hinsichtlich einer zusätzlichen Positionsbestimmung für das Transportmittel 1 muss allerdings grundsätzlich zwischen einer Ringaufnahme und einer Ringablage unterschieden werden.

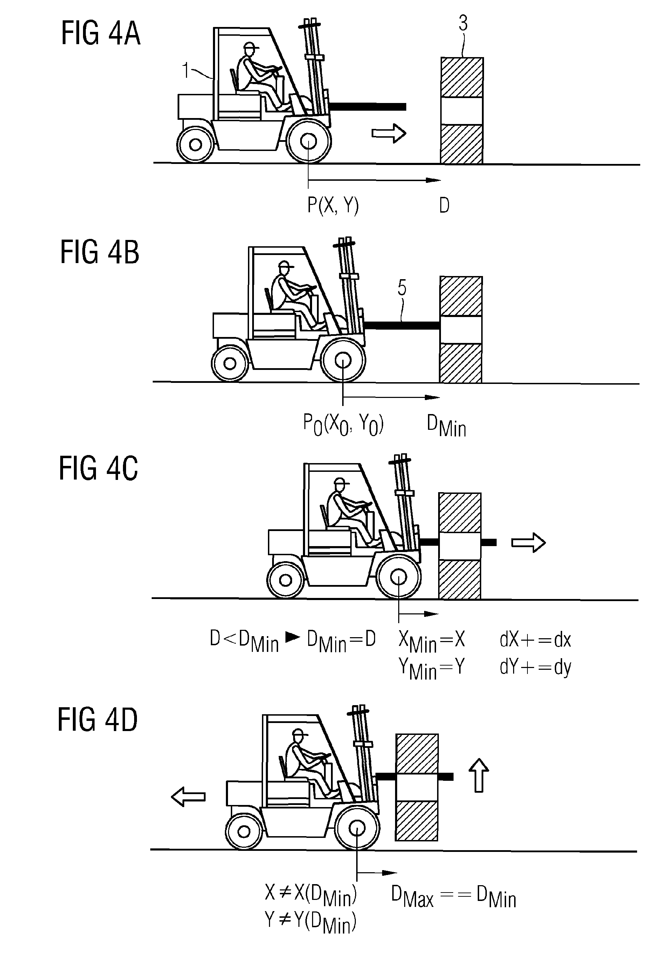

Figur 4a bis d zeigen jeweils eine Seitenansicht für einen erfindungsgemäßen Ablauf bei einer Ringaufnahme. Figuren 4a bis 4d zeigen eine Orientierungsbestimmung des Transportmittels 1 bei der Ringaufnahme. Figur 4a zeigt ein Annähern des Transportmittels 1 an das Transportgut 3, wobei noch keine Erfassung von Positionsänderungen ausgeführt wird. Figur 4b zeigt einen Beginn eines Einfahrens des Transportmittels 1 mit einer Tragefläche 5 in das Transportgut 3. Die Aufzeichnung der Relativbewegung beginnt nun mit diesem Einbringen einer Gabel oder eines Dorns als Tragefläche 5 in ein Ringauge des Transportgutes 3. Diese Relativbewegung kann sensoriell hinreichend genau mit einem beispielsweise an einem Mast angebrachten Messsystem erkannt werden. Ein derartiges Messsystem kann beispielsweise ein Laserscanner oder eine Kamera sein. Andere Messsysteme sind ebenso verwendbar. Zu dem Zeitpunkt gemäß Figur 4b wird nun die Position des Transportgutes 3 relativ zum Transportmittel 1 für eine spätere Bestimmung der Aufnahmeposition in ortsfesten Hallenkoordinaten gemerkt. Diese Relativposition kann besonders einfach mittels Angabe eines Abstandes D beschrieben werden. Für diesen Anfangszeitpunkt ist D = D0. Zusätzlich wird die Position des Transportmittels 3 gemerkt, wobei die Position P0 = (X, Y), für die spätere Bestimmung der Aufnahmeposition in ortsfesten Hallenkoordinaten gemerkt wird. Es wird ein minimaler Abstand des Transportgutes 3 relativ zum Transportmittel 1 initialisiert. Zusätzlich wird die Position des Transportmittels 1 bei minimalem Abstand zum Transportgut 3 initialisiert. Ebenso wird ein Akkumulator für die Relativbewegung des Transportmittels 1 zurückgesetzt beziehungsweise genullt. Ein jeweils minimaler Abstand wird mit DMin bezeichnet, eine dazugehörige Position des Transportmittels wird mit PMin (X, Y) bezeichnet und die Relativbewegung des Transportmittels mit dP bezeichnet.

Figur 4c stellt den Vorgang des Einfahrens des Transportmittels 1 in das Transportgut 3 dar. Für diese folgenden Zeitabschnitte, in denen sich der Ring gegenüber dem vorangegangenen Zeitabschnitt auf das Transportmittel 1 zubewegt, wird der minimale Abstand DMin entsprechend aktualisiert, die Position PMin bei neuem minimalen Abstand gemerkt und die Positionsänderung gegenüber dem letzten Zeitabschnitt dP (dx, dy) akkumuliert.

Figur 4d zeigt die Zeitdauer, in der sich das Transportmittel 1 um mehr als eine parametrierbare Entfernung von der letzten gemerkten Transportmittelposition PMin entfernt, ohne dass eine weitere Reduzierung des Abstands stattfindet. Zu diesem Zeitpunkt gilt der Aufnahmevorgang als abgeschlossen. Dies ist der Fall, wenn das Transportgut 3 angehoben wird und das Transportmittel 1 rückwärts abfährt. Zwar ist eine Erfassung des Anhebens lediglich mit großem Aufwand detektierbar, aber im Gegensatz dazu kann das Abfahren des Transportmittels 1 leicht erfasst werden. Ist das Ende des Einfahrens gemäß Figur 4c mittels der Bedingungen gemäß Figur 4d als beendet erfasst worden, kann eine Orientierung S des Transportmittels 1 während der Ringaufnahme anhand akkumulierter Positionsänderungen berechnet werden. Eine Formel kann beispielsweise folgendermaßen sein:

$$(1) \quad \texttt{Orientierungswinkel beta = atan2(dy, dx)}.$$

Zusammen mit den vorab gespeicherten Informationen der Position P0 des Transportmittels und des Relativabstandes D0 kann nun die Aufnahmeposition des Transportgutes 3 beziehungsweise des Ringes bestimmt werden.

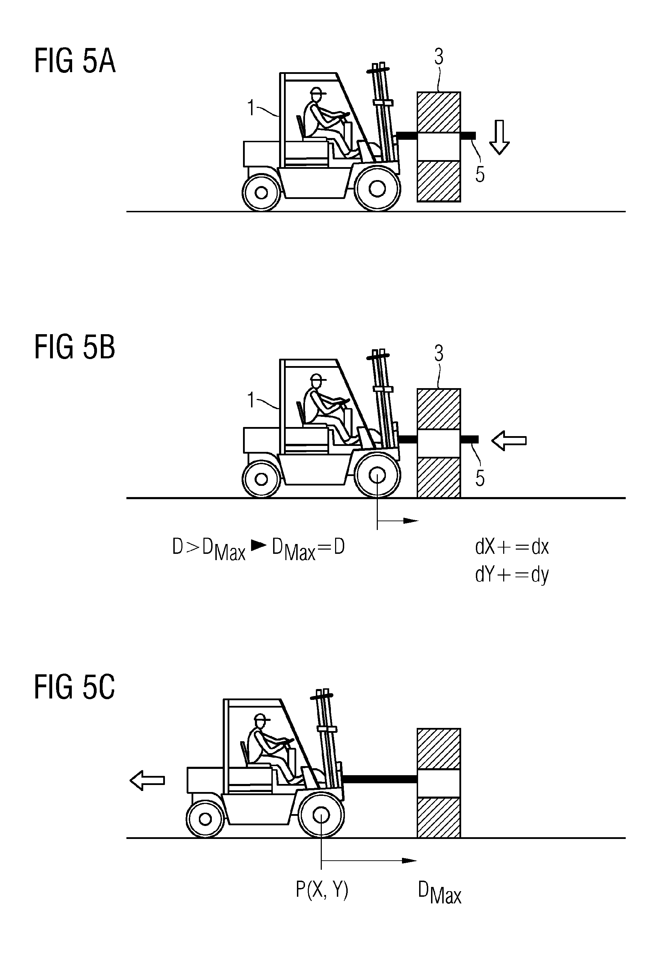

Figuren 5a bis 5c zeigen Seitenansichten während einer Ablage des Transportgutes 3, das insbesondere ein Ring sein kann. Nach Berechnen der Ringaufnahmeposition gilt die Ringaufnahme als abgeschlossen. Nach Abschluss der Vorgänge gemäß Figur 4a bis 4d wird der Akkumulator für die Relativbewegung dP des Transportmittels zurückgesetzt, das heißt genullt. Des Weiteren wird der maximale Abstand zwischen Transportmittel und Transportgut DMax mit dem Wert DMin initialisiert. Figur 5a zeigt das Stadium des Absetzens des Transportgutes 3 durch das Transportmittel 1, wobei das Absetzen relativ schwer detektierbar ist. Figur 5b zeigt das Verfahrensstadium des Ausfahrens der Tragefläche 5 des Transportmittels 1 aus dem Transportgut 3. Für diese folgenden Zeitabschnitte, in denen sich das Transportgut 3, das hier ein Ring ist, gegenüber dem vorangegangenen Zeitabschnitt vom Transportmittel 1 wegbewegt, wird der maximale Abstand DMax entsprechend aktualisiert und wird die Positionsänderung des Transportmittels 1 gegenüber dem letzten Zeitabschnitt dP (dx, dy) akkumuliert.

Figur 5c zeigt das Stadium in dem die Tragefläche 5 vollständig aus dem Bereich des Transportgutes 3 ausgefahren beziehungsweise entfernt ist. Dieses vollständige Entfernen der Gabel beziehungsweise des Dorns bestimmt das Ende des Absetzvorgangs. Nun kann die Orientierung des Transportmittels während des Absetzvorgangs bestimmt werden. Hierzu kann beispielsweise die Formel

$$(2) \quad \texttt{Orientierungswinkel beta = atan2(-dy, -dx)}$$

angewendet werden. Zusammen mit der aktuellen Transportmittelposition P zum Endzeitpunkt des Ausfahrens und der relativen Ringposition D zum Transportmittel 1 kann damit die Ablageposition des Transportgutes 3, das hier ein Ring ist, in Hallenkoordinaten berechnet werden.

Mittels der in Fig. 4a bis d und Fig. 5a bis c dargestellten Schritte kann eine Erfassung einer jeweiligen aktuellen Position X/Y eines Transportgutes oder einer Materialausformung in einem ortsfesten Koordinatensystem H während einer Aufnahme oder Ablage erfolgen, wobei mittels der bestimmten Position X/Y eine Identifizierung der Materialausformung ausgeführt werden kann.

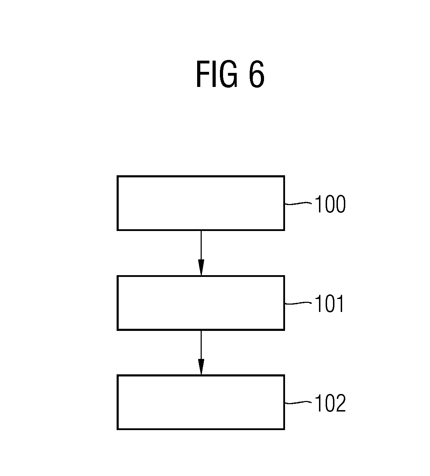

Entsprechend kann gemäß Figur 6 ein Verfahren zur mittels eines Transportmittels erfolgenden Bestimmung einer jeweiligen Lagerposition X/Y eines Transportguts in einer Ablageeinrichtung A in einem ortsfesten ersten Koordinatensystem H ausgeführt werden, wobei mittels der bestimmten Lagerposition X/Y für das Transportmittel eine Identifizierung des Transportguts ausgeführt wird. Die Schritte des Verfahrens können folgende sein: Schritt S1 kann ein Erfassen der Position des Transportmittels in dem ersten Koordinatensystem H sein. Schritt S2 kann ein Erfassen der Position des Transportguts relativ zum Transportmittel in einem zum Transportmittel festen zweiten Koordinatensystems T sein. Schritt S3 kann ein Erfassen einer Orientierung S des Transportmittels und einer Orientierung R der Ablageeinrichtung A relativ zur Orientierung S des Transportmittels im ersten Koordinatensystem H sein, wobei in der jeweiligen Lagerposition X/Y die erste und die zweite Orientierung übereinstimmen.

**Patentansprüche**

1. Verfahren zum Erfassen einer jeweiligen Orientierung S eines Transportmittels in einem ersten Koordinatensystem H während eines Aufnehmens oder eines Ablegens eines Transportgutes von einer oder auf eine Ablageeinrichtung; **gekennzeichnet durch** Erfassen von jeweiligen Positionsänderungen des Transportmittels in dem ersten Koordinatensystem H während sich eine Tragefläche des Transportmittels innerhalb des Transportgutes derart zu diesem relativ bewegt, dass sich die Position des Transportguts relativ zum Transportmittel in einem zum Transportmittel festen zweiten Koordinatensystem T ändert, wobei eine Richtung in die eine Positionsänderung erfolgt die jeweilige Orientierung S bestimmt.

2. Verfahren nach Anspruch 1, **gekennzeichnet durch** Erfassen von Positionsänderungen des Transportmittels während des Aufnehmens des Transportgutes mittels Einbringen der Tragefläche in das Transportgut bis zu einem minimalen Abstand Dmin des Transportgutes zum Transportmittel.

3. Verfahren nach Anspruch 2, **gekennzeichnet durch** Bestimmen einer Aufnahmeposition des Transportgutes mittels zu einem Anfangszeitpunkt des Einbringens erfolgendes Erfassen der Position des Transportmittels in dem ersten Koordinatensystem H und der Position des Transportguts relativ zum Transportmittel in dem zum Transportmittel festen zweiten Koordinatensystem T unter Einbeziehung der bestimmten Orientierung S des Transportmittels.

4. Verfahren nach Anspruch 1, **gekennzeichnet durch** Erfassen von Positionsänderungen des Transportmittels während des Ablegens des Transportgutes mittels Ausbringen der Tragefläche aus dem Transportgut bis zu einem maximalen Abstand Dmax des Transportgutes zum Transportmittel.

5. Verfahren nach Anspruch 4, **gekennzeichnet durch** Bestimmen einer Ablageposition des Transportgutes mittels zu einem Endzeitpunkt des Ausbringens erfolgendes Erfassen der Position des Transportmittels in dem ersten Koordinatensystem H und der Position des Transportguts relativ zum Transportmittel in dem zum Transportmittel festen zweiten Koordinatensystem T unter Einbeziehung der bestimmten Orientierung S des Transportmittels.

6. Verfahren nach einem der vorangehenden Ansprüche, **gekennzeichnet durch** Berechnen der Orientierung des Transportmittels mittels Akkumulieren der Positionsänderungen des Transportmittels.

7. Verfahren nach Anspruch 6, **gekennzeichnet durch** diskrete Positionsänderungen des Transportmittels.

8. Verfahren nach 7, **gekennzeichnet durch** Berechnen einer Orientierung S anhand akkumulierter diskreter Positionsänderungen des Transportmittels mit der Formel:

```
beta = atan2(dy, dx).
```

9. Verfahren nach einem der vorangehenden Ansprüche, **dadurch gekennzeichnet, dass** das erste Koordinatensystem H zweidimensional ist und sich parallel zu einer Bodenfläche erstreckt.

10. Verfahren nach einem der vorangehenden Ansprüche, **dadurch gekennzeichnet, dass** das zweite Koordinatensystem T zweidimensional ist und sich im ersten Koordinatensystem H erstreckt.

11. Verfahren nach Anspruch 3 oder 5, **dadurch gekennzeichnet, dass** mittels der Aufnahmeposition oder der Ablageposition eine Identifizierung des Transportgutes ausgeführt wird.

12. Verfahren nach einem der vorangehenden Ansprüche, **dadurch gekennzeichnet, dass** das Transportgut ringförmig, das Transportmittel ein Gabelstapler und die Ablageeinrichtung eine Rinne ist.

13. Verfahren nach Anspruch 12, **dadurch gekennzeichnet, dass** die Rinne entlang eines ganzzahligen Vielfachen von 90° in einem Boden verankert ist.

14. Vorrichtung zum Erfassen einer jeweiligen Orientierung (S) eines Transportmittels in einem ersten Koordinatensystem (H) während eines Aufnehmens oder eines Ablegens eines Transportgutes von einer oder auf eine Ablageeinrichtung;
**gekennzeichnet durch**
eine Erfassungseinrichtung (E) zum Erfassen von jeweiligen Positionsänderungen des Transportmittels in dem ersten Koordinatensystem (H) während sich eine Tragefläche des Transportmittels innerhalb des Transportgutes derart zu diesem relativ bewegt, dass sich die Position des Transportguts relativ zum Transportmittel in einem zum Transportmittel festen zweiten Koordinatensystem (T) ändert, wobei eine Richtung in die eine Positionsänderung erfolgt die jeweilige Orientierung (S) bestimmt.

15. Vorrichtung nach Anspruch 14, **gekennzeichnet durch** mittels der Erfassungseinrichtung (E) ausgeführtes Erfassen von Positionsänderungen des Transportmittels während des Aufnehmens des Transportgutes mittels Einbringen der Tragefläche in das Transportgut bis zu einem minimalen Abstand Dmin des Transportgutes zum Transportmittel.

16. Vorrichtung nach Anspruch 15, **gekennzeichnet durch** mittels einer Rechnereinrichtung ausgeführtes Bestimmen einer Aufnahmeposition des Transportgutes mittels
zu einem Anfangszeitpunkt des Einbringens erfolgendes Erfassen der Position des Transportmittels in dem ersten Koordinatensystem H und der Position des Transportguts relativ zum Transportmittel in dem zum Transportmittel festen zweiten Koordinatensystem T unter Einbeziehung der bestimmten Orientierung S des Transportmittels.

17. Vorrichtung nach Anspruch 14, **gekennzeichnet durch** mittels der Erfassungseinrichtung (E) Erfassen von Positionsänderungen des Transportmittels während des Ablegens des Transportgutes mittels Ausbringen der Tragefläche aus dem Transportgut bis zu einem maximalen Abstand Dmax des Transportgutes zum Transportmittel.

18. Vorrichtung nach Anspruch 17, **gekennzeichnet durch** mittels einer Rechnereinrichtung ausgeführtes Bestimmen einer Ablageposition des Transportgutes mittels zu einem Endzeitpunkt des Ausbringens erfolgendes Erfassen der Position des Transportmittels in dem ersten Koordinatensystem H und der Position des Transportguts relativ zum Transportmittel in dem zum Transportmittel festen zweiten Koordinatensystem T unter Einbeziehung der bestimmten Orientierung S des Transportmittels.

19. Vorrichtung nach einem der vorangehenden Ansprüche 14 bis 18, **gekennzeichnet durch** mittels einer Rechnereinrichtung ausgeführtes Berechnen der Orientierung des Transportmittels mittels Akkumulieren der Positionsänderungen des Transportmittels.

**20.** Vorrichtung nach Anspruch 19, **gekennzeichnet durch** mittels der Erfassungseinrichtung (E) ausgeführtes Erfassen von diskreten Positionsänderungen des Transportmittels.

**21.** Vorrichtung nach 20, **gekennzeichnet durch** mittels der Rechnereinrichtung ausgeführtes Berechnen einer Orientierung (S) anhand akkumulierter diskreter Positionsänderungen des Transportmittels mit der Formel:

```
beta = atan2(dy, dx).
```

**22.** Vorrichtung nach einem der vorangehenden Ansprüche 14 bis 21, **dadurch gekennzeichnet, dass** das erste Koordinatensystem H zweidimensional ist und sich parallel zu einer Bodenfläche erstreckt.

**23.** Vorrichtung nach einem der vorangehenden Ansprüche 14 bis 22, **dadurch gekennzeichnet, dass** das zweite Koordinatensystem T zweidimensional ist und sich im ersten Koordinatensystem H erstreckt.

**24.** Vorrichtung nach Anspruch 16 oder 18, **dadurch gekennzeichnet, dass** mittels der Aufnahmeposition oder der Ablageposition eine Identifizierung des Transportgutes ausgeführt wird.

**25.** Vorrichtung nach einem der vorangehenden Ansprüche 14 bis 24, **dadurch gekennzeichnet, dass** das Transportgut ringförmig, das Transportmittel ein Gabelstapler und die Ablageeinrichtung eine Rinne ist.

**26.** Vorrichtung nach Anspruch 25, **dadurch gekennzeichnet, dass** die Rinne entlang eines ganzzahligen Vielfachen von 90° in einem Boden verankert ist.

# FIG 1

# FIG 2

# FIG 3

**FIG 4A**

$P(X, Y)$   $D$

**FIG 4B**

$P_0(X_0, Y_0)$   $D_{Min}$

**FIG 4C**

$D < D_{Min} \blacktriangleright D_{Min} = D$   $X_{Min} = X$   $dX+=dx$
$Y_{Min} = Y$   $dY+=dy$

**FIG 4D**

$X \neq X(D_{Min})$   $D_{Max} == D_{Min}$
$Y \neq Y(D_{Min})$

## FIG 5A

## FIG 5B

$$D > D_{Max} \blacktriangleright D_{Max} = D$$

$$dX + = dx$$
$$dY + = dy$$

## FIG 5C

$$P(X, Y) \qquad D_{Max}$$

# FIG 6

Europäisches Patentamt
European Patent Office
Office européen des brevets

**EUROPÄISCHER RECHERCHENBERICHT**

Nummer der Anmeldung

EP 13 16 2248

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| Y | US 2009/198371 A1 (EMANUEL DAVID C [US] ET AL) 6. August 2009 (2009-08-06) * Zusammenfassung * * Absatz [0013] - Absatz [0019] * ----- | 1-26 | INV. B66F9/075 G01S17/06 |
| Y | DE 39 26 438 C2 (FRAUNHOFER GES FORSCHUNG [DE]) 7. Januar 1993 (1993-01-07) * Zusammenfassung; Abbildungen 1,2 * * Spalte 3, Zeile 23 - Spalte 4, Zeile 34 * ----- | 1-26 | |

RECHERCHIERTE SACHGEBIETE (IPC)

B66F
G01S

Der vorliegende Recherchenbericht wurde für alle Patentansprüche erstellt

| Recherchenort | Abschlußdatum der Recherche | Prüfer |
|---|---|---|
| München | 31. Mai 2013 | López de Valle, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 13 16 2248

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-05-2013

| Im Recherchenbericht angeführtes Patentdokument | Datum der Veröffentlichung | Mitglied(er) der Patentfamilie | Datum der Veröffentlichung |
|---|---|---|---|
| US 2009198371 A1 | 06-08-2009 | KEINE | |
| DE 3926438 C2 | 07-01-1993 | KEINE | |

EPO FORM P0461